# EUROPEAN PATENT APPLICATION

(11) **EP 4 842 144 A1**
(43) Date of publication of application: **18.11.2026**
(21) Application number: 25176734.9
(22) Date of filing: 15.05.2025
(51) Int. Cl.: H05H 3/06, H05H 6/00

(54) **NEUTRON SOURCE ASSEMBLY AND METHOD OF GENERATING NEUTRONS**

(71) Applicant: Mirrotron Kft., 1121 Budapest (HU)
(72) Inventor: Mezei, Ferenc, 1026 Budapest, Júlia u. 3. fsz. 2. (HU); Ha, Shuai, 1119 Budapest, Náday Ferenc u. 6. 2. em. 2. (HU)
(74) Representative: Kacsuk, Zsófia

(57) **Abstract**

The invention relates to neutron source assembly containing a lithium target and a beam line for delivering an accelerated particle beam to the lithium target, wherein the lithium target is arranged in an inner space of a container adapted to hold the lithium target in liquid phase, the container having an open upper side and a back side opposite to the particle beam line, and a heating-cooling assembly is arranged on the back side of the container. A variant of the method for higher particle energies consists of using a material window on the side of the container directly exposed to the particle radiation.

The invention further relates to a method of using the neutron source assembly for generating neutrons in thermal or epithermal neutron energy ranges.

## Description

### Technical field

The present invention relates to a neutron source assembly containing a lithium target and a beam line for delivering an accelerated particle beam to the lithium target.

The invention further relates to a method of generating neutrons.

### Background

A common method for generating thermal and epithermal neutron beams for research, material examination and healthcare applications is the bombardment of a Li containing target with protons with energy above a threshold of 1.9 MeV. The absorption of a proton by a lithium nucleus is due to the reaction ⁷Li(p,n)⁷Be, which implies the emission of one neutron and the transmutation of the ⁷Li nucleus into a ⁷Be nucleus. This process is an often-used reaction for generating neutron beams with the bombardment of Li target with protons of at least 1.9 MeV kinetic energy. However, in bombarding Li material with protons of such kinetic energy, the most likely process is the slowing down of the protons by energy losses on the electrons in the Li metal, and only a small fraction of the incoming proton beam will lead to neutron emission. This means that most of the high velocity incoming protons are slowed down by interaction with the electrons around the Li nuclei until the protons lose essentially all of their original kinetic energy and stop. These protons then combine with an electron in the metallic material into an ordinary H atom, that acts as a chemical impurity in the lithium metal. At room temperature the diffusion of H atoms is rather slow in Li metal, and as H atoms accumulate as a result of proton beam irradiation, the irradiated solid Li metal becomes brittle and porous by the increased presence of H as an impurity in the original metallic Li target.

Another difficulty with the solid Li target is its thermal behavior, due to its low melting point (180 °C) and low thermal conductivity. Solid Li target, e.g. hot rolled Li layer on a water-cooled copper base, has to be used in relatively thin layer, in order to make the best possible thermal contact between the Li target surface and the cooled base. For example, in medical applications the penetration depth of proton radiation in the energy range of 2-3 MeV is about 100 µm. In order to spread the proton beam energy over larger target surface, it is common practice to work with target surfaces at an angle of considerably less than 90° with respect of the proton beam direction, which makes the depth of proton penetration measured from the Li target surface considerably less than 100 µm. The temperature gradient between the top of the proton beam heated target surface and the cooled base plate of the target can be considerable, but it must be limited in order to avoid the melting of the Li target on its surface at 180°C. This can become even more critical in the case of pulsed proton beams where the target surface temperature will correspond to the peak proton beam power in the pulses.

Attempts have been made in the prior art to overcome the problem of melting and of degradation of the metallic qualities of the solid lithium target with irradiation

For example, a liquid-lithium jet target is proposed by S. Halfon et al. in "High-power liquid-lithium jet target for neutron production" (Review of Scientific Instruments 84, 123507, 2013). The set-up was designed for high-intensity proton beam irradiation (1.91-2.5 MeV, 1-2 mA) to produce neutrons via the ⁷Li(p,n)⁷Be reaction. Liquid lithium is circulated through the target loop at 200°C and generates a stable 1.5 mm-thick film flowing at a velocity up to 7 m/s on a concave supporting wall. The advantage of such a liquid lithium jet target is that when the lithium is in the liquid phase the diffusion of the H atoms created by the proton beam radiation in the metallic lithium becomes substantial, and to the Li lattice chemically not bound hydrogen contents ends up by arriving to the surface of the target, eventually joining into H₂ molecules on their way and rapidly evaporate. Thus, solid lithium targets have an inherently limited lifetime for proton beam irradiation as the H impurity concentration increases, while liquid lithium jet targets effectively remain essentially free from H impurities and are basically usable for unlimited times. In practice, of course, other impurities, pl. vehement oxidation in contact with air, can also end up destroying the solid target. On the other hand, by the mandatory operation in high vacuum, which is a necessity also for the proper preservation of the accelerated protons along their designed trajectories, the uninterrupted high vacuum atmosphere inside the accelerator and target space also keeps the oxidation level of lithium proton beam targets very low for essentially infinite time. The lithium oxide molecules that can come into existence on the surface of liquid lithium will also have a probability to evaporate into the vacuum and eventually be captured or removed by the stationarily operating high vacuum pumping system at accelerators.

Although circulating a film of liquid lithium as the target in a neutron source assembly has many advantages - like high thermal stability, self-healing under radiation, and high neutron yield - but it also comes with significant engineering, safety, and operational challenges. It is difficult to maintain a smooth, uniform film or jet due to beam induced disturbances. Furthermore, lithium is highly reactive, flammable and water-sensitive. It also becomes activated requiring appropriate radiation protection along the whole loop.

It is an objective of the present invention to overcome the problems associated with the prior art. In particular, it is an objective of the present invention to overcome the problem of degradation and overheating of lithium targets, and the problems associated with circulating liquid lithium in a neutron source assembly.

### Summary of the invention

These objectives are achieved by a neutron source assembly according to claim 1 and methods according to claims 10 and 13.

The inventors of the present invention have recognized that the degradation and overheating problem of lithium targets can be efficiently mitigated by a stationary liquid target of a practically well manageable thickness of about 1-3 mm. A liquid target layer of such thickness can be operated at an equilibrium temperature anywhere just above the 180°C melting point and the temperature can be allowed to increase during proton beam irradiation at the liquid target surface up to 500°C. The vapor pressure of lithium stays below 10⁻² mbar up to this temperature. Lithium evaporation rates on free liquid lithium surfaces have been found to be readily manageable in the existing examples of higher power neutron sources using streaming liquid lithium target, such as the liquid lithium jet mentioned above.

Further preferred embodiments of the invention are defined in the dependent claims.

### Brief description of the drawings

Further details of the invention will be apparent from the accompanying figures and exemplary embodiments.
Fig. 1 is a schematic illustration of a first embodiment of a neutron source assembly according to the invention.
Fig. 2 is a schematic illustration of a second embodiment of a neutron source assembly according to the invention.
Fig. 3 is an enlarged view of the container of Fig. 2 holding the lithium target and its surroundings.
Fig. 4 is a block diagram of the main components of a neutron source assembly according to the invention.

### Detailed Description of the Invention

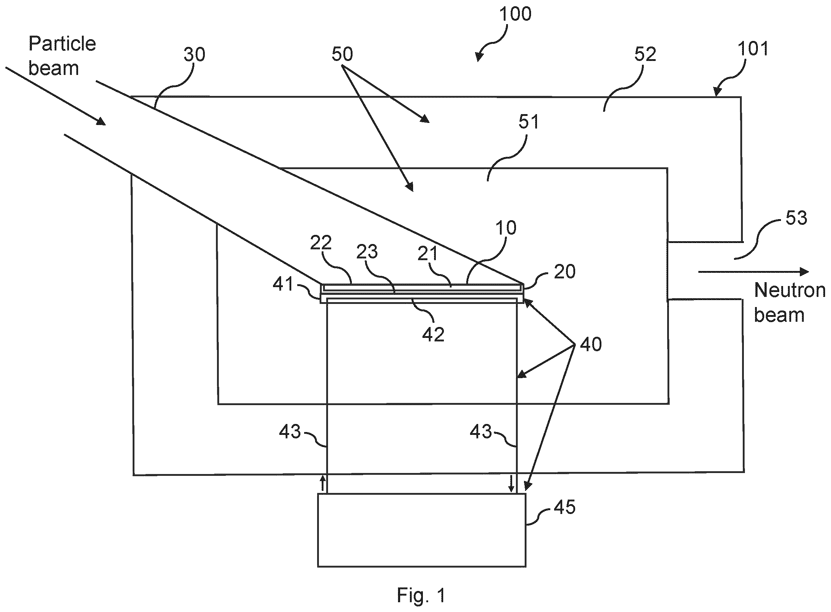

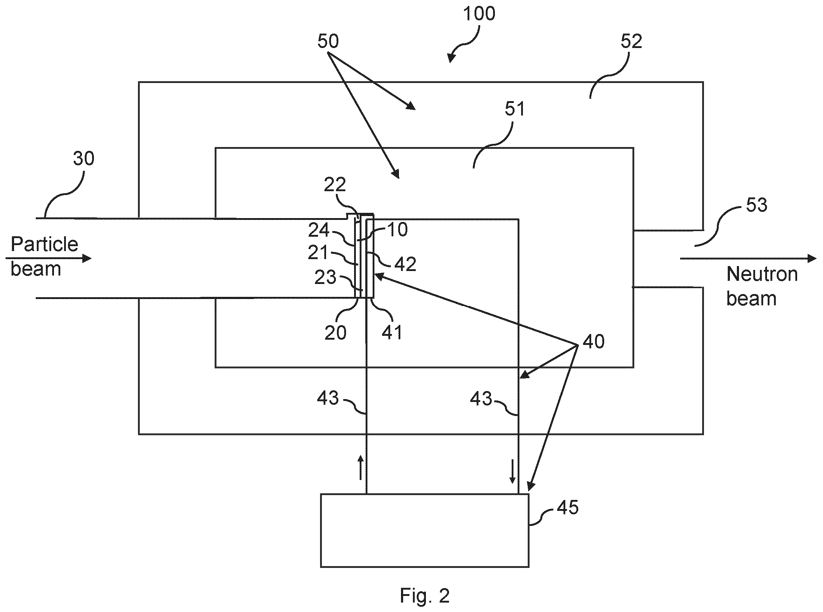

Figs. 1 and 2 schematically illustrate two preferred embodiments of a neutron source assembly 100 in accordance with the present invention.

The neutron source assembly 100 contains a neutron source 101 wherein a lithium target 10 is arranged in an inner space 21 of a container 20 adapted to hold the lithium target 10 in liquid phase.

A particle beam line 30 is provided for delivering an accelerated particle beam to the lithium target 10. The type of particle beam that is used in practice with lithium targets 10 is generally a proton beam or a deuterium beam. Hereinafter, whenever reference is made to a particle beam (or particle) it is understood to include the possibility of a proton beam (or proton), a deuteron beam (or deuteron) or any other particle beam (or particle) suitable for generating neutrons in lithium targets 10.

The particle beam line 30 is preferably a tube that can be connected to a beam line of an accelerator producing the accelerated particle beam. The particle accelerator operates under high vacuum and the high vacuum atmosphere is also maintained in the particle beam line 30 of the neutron source assembly 100. The high vacuum has a pressure of preferably less than 10⁻⁵ mbar. The particle beam line 30 can be made of metal, preferably stainless steel or aluminium. The end of the particle beam line 30 facing the lithium target 10 is preferably a free opening of the tube forming the beam line 30 or it may be closed off by a thin material window.

The particle beam line 30 is arranged so as to face an open upper side 22 of the container 20.

The proton beam delivered over the beam line 30 may impact on a horizontal upper surface of the lithium target in a wide range of angles from vertical (90 deg) to quite flat angles. However, according to a preferred embodiment, the particle beam line 30 is configured to deliver the accelerated particle beam to the horizontal upper surface of the liquid lithium target 10 at a low impact angle, preferably at an impact angle of less than 45°, preferably less than 30°, more preferably at an impact angle between 15-30°. This makes it possible to spread the heat load by the accelerated particle beam on the Li target over a larger area and to use a thinner layer of liquid lithium yet allow the protons to react with the lithium or to slow down before reaching the back side 23 of the container 20.

Preferably the beam line 30 is connected vacuum tightly to the container 20 in order for the open upper side 22 of the container 20 to be in communication with the high vacuum atmosphere within the beam line 30. In this way, when the lithium target 10 is in liquid phase the upper horizontal surface of the liquid is freely exposed to the high vacuum maintained for the accelerated particle beam propagation.

According to the first embodiment illustrated in Fig. 1 the particle beam line 30 terminates adjacent the open upper side 22 of the container 20. Alternatively, the beam line 30 may terminate in a high vacuum target space provided above the container 20. Furthermore, it is possible to install several beam lines 30, eventually for different purposes, around the stationary liquid lithium target 10, in which case each beam line 30 may terminate in a common high vacuum target space above the container 20 such that the end of each beam line 30 is facing the open upper side 22 of the container 20 in order to allow the delivered particles to impact on the surface of the lithium target 10.

The container 20 has a back side 23 opposite the particle beam line 30. A heating-cooling assembly 40 is arranged on the back side 23 of the container 20.

In the arrangement illustrated in Fig. 1, the back side 23 of the container 20 is the bottom side, which is preferably arranged in a horizontal position to be parallel with the free surface of the lithium target 10 when it is in the liquid phase, this way, the bulk of the liquid lithium target 10 has the same thickness everywhere, which makes thermal regulation simpler.

Preferably the container 20 is dimensioned such that the lithium target 10 fills the container 20 up to a height of less than 3 mm, preferably 1 - 2 mm, when in liquid phase.

For example, the container 20 may be made of copper. It is also conceivable to make the side walls of the container from one material and affix it liquid tightly to a baseplate 41 of a different material. This baseplate 41 may form part of the heating-cooling assembly 40. Alternatively, the container 20 may have a separate wall on its back side 23 which is affixed to the baseplate 41 of the heating-cooling assembly 40. Accordingly, the baseplate 41 of the heating-cooling system is either arranged adjacent to the back wall 23 of the container 20 (not excluding the presence of further heat-conducting material between the baseplate 41 and the back wall 23) or the baseplate 41 forms the back wall 23 of the container opposite the particle beam line 30.

Preferably, the baseplate 41 of the heating-cooling assembly 40 comprises one or more integrated tubes 42 (cooling channels) for circulating a heat transfer fluid therein, in order to remove heat from the lithium target 10 during operation. The heat transfer fluid may be liquid or gas. According to a preferred embodiment, the heat transfer fluid is pressurized water.

The tube or tubes 42 may be provided inside a thicker plate, e.g. a copper plate or may be welded thereon and may be arranged in circular, spiral or serpentine pattern and filled with pressurized fluid, preferably water. The heating-cooling assembly 40 may further comprise a heating-cooling unit 45 which is connected to the tubes 42 inside the baseplate by conduits 43. The heating-cooling unit 45 may be a heat exchanger arranged outside of a moderator-reflector system, which preferably surrounds the target 10. The heat exchanger is adapted to heat or cool the pressurized water. Under high pressure, water may have a boiling point over 300°C which makes it suitable for cooling the lithium target 10 even in the liquid phase at temperatures higher than 180°C.

According to a preferred embodiment the lithium target 10 is surrounded by the moderator-reflector system 50, which comprises a moderator 51 and a reflector 52 as well as at least one neutron beam line 53. The particle beam line 30 is configured to traverse the moderator-reflector system 50 through empty space inside appropriate openings. For providing an epithermal neutron beam for therapeutic irradiation (i.e. sufficient neutron beam intensity between 0.5 and 10,000 eV neutron energy and not too much outside this range) the initial emitted neutron spectrum from the Li target 10 with average neutron beam energy of about 40,000 eV or more e.g. at higher than 2.5 MeV proton energies, has to be slowed down by the moderator 51. This slowing down happens with random elastic collisions of neutrons with the atomic nuclei in the moderator 51. In such collisions some part of the kinetic neutron energy will be transferred to the other nucleus in the collision. For optimal efficiency for this partial energy transfer of the neutron energy the masses of the atoms in the moderator have to have an adequate distribution between atomic weights of about 15 to 30. Since the collisions with atoms in the epithermal neutron energy range is little influenced by the chemical bindings, this right distribution of nuclei can be achieved with an ensemble of parts in the moderator 51 with different compositions, since at the end what mostly matters is the number of different atoms over the whole moderator 51. This allows us to use low cost, commercially available materials in the moderator 51. According to a preferred embodiment a good and cost-effective moderator 51 comprises Teflon (C₂F₄)ₙ and MgO, for example it is composed of about half of the volume of Teflon (C₂F₄)ₙ and of MgO each. Depending on the required neutron energy spectrum other known materials may be used in the moderator 51, such as water, heavy water, graphite, beryllium (which can also act as a neutron source), methane, liquid hydrogen, etc.

Furthermore, it is also possible to provide a segmented moderator 51 comprising different moderator materials in different directions or to provide several different moderators around the same target in different directions. The reason for this is the following. While the angular distribution of the initial emission of fast neutrons from the lithium target 10 shows some clear preference in the direction of the incoming proton beam, the angular distribution of moderated epithermal neutrons depends very little on the original proton beam direction, within at least 90 degrees from this direction. Therefore, there is an opportunity to install several beam lines 30, eventually for different purposes around the Li target 10. The same Li target 10 can also be used for thermal neutron production for other than therapeutical applications. In this case, the moderator material has to contain light elements, such as hydrogen or deuterium. Different types of moderators 51 can be placed around the same target 10 in sufficiently different directions. For example, water and/or liquid hydrogen moderators 51 can also be installed around the lithium target 10, both for parallel use with epithermal beams and for alternate uses.

The reflector 52 is preferably provided around the moderator 51 in order to reflect back neutrons from exiting the neutron source assembly 100 at any other location than the one or more neutron beam lines 53 traversing the moderator-reflector system 50. This allows additional chances for neutrons to enter the moderators and exit through a utilized neutron beam. The reflector 51 may be made for example of graphite, beryllium, lead or heavy water, according to the envisaged use of the beamlines as is well known to a person skilled in the art. Outside the reflector 52 preferably adequate shielding is installed for radiation protection purposes both for users of the facility and the surrounding area. This is not shown and discussed here, methods and rules are well known and codified for their adequate design, evaluation, supervision and testing.

Depending on the application, it is also conceivable to apply the moderator 51 separately without surrounding it with the reflector 52 or to apply only the reflector 52 without providing the moderator 51 therein. Furthermore, certain materials are suitable for acting both as moderator 51 and as reflector 52, e.g. graphite, beryllium.

The embodiment shown in Fig. 1 is particularly suitable for generating epithermal neutron irradiation, e.g. for therapeutic use. For the proton energy range that is the most effective for high intensity epithermal neutron beam production, i.e. below 3-4 MeV proton energy, it is not practicable to deliver such a proton beam to the lithium target 10 through a window wall of the container 20. The penetration depth of such proton beams into potential container wall materials is very small and most protons will not reach the lithium target 10 inside of the container 20 at realistic sturdy container wall thicknesses. For this reason, if the generation of an epithermal neutron beam is required the proton beam has to enter through the open upper side of the container 20 to impact directly onto the free horizontal upper surface of the liquid (or solid) lithium target volume.

For proton energies above 5 MeV, it becomes feasible and attractive to expose the stationary liquid Li target 10 to the proton beam through a side wall of its container 10, without excessive loss of proton beam intensity and energy in the crossing of a sufficiently strong and long lifetime material window.

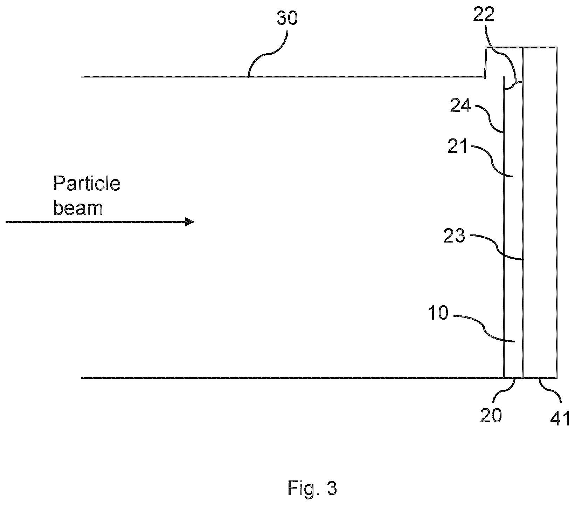

Accordingly, in a second preferred embodiment illustrated in Figs. 2 and 3 a material window 24 is provided on the side of the container 20 facing the particle beam line 30. The same reference numerals are used in Figs. 2 and 3 to denote structural elements corresponding to those shown in Fig. 1.

According to this embodiment the container 20 is in an upright position or upright and tilted at a horizontal angle to the particle beam direction whereby the material window 24 (as well as the back side 23) extends at least partly in a vertical direction. The width of the inner space 21 for the stationary liquid lithium target 10 of the container 20 between the material window 24 and the opposite back side 23 is preferably less than 3 mm, more preferably about 1 - 2 mm.

According to a preferred embodiment the material window 24 is a thin wall comprising partly or entirely beryllium and having a thickness of preferably less than 1 mm, more preferably less than 0.6 mm, for example 0.2 to 0.5 mm. This has for advantage that the beryllium window 24 has high heat conductivity and it also emits neutrons when exposed to an energetic particle beam. Above 20 MeV proton beam energy beryllium produces more neutrons than lithium. Since the beryllium window 24 is thin, the window 24 does not stop the protons which thus enter the lithium target 10 with lower energy where the protons are still able to produce further neutrons, in this way more neutrons can be produced than if the protons would propagate through an exclusively beryllium target or an exclusively lithium target. The optimal thickness of the Be window 24 for highest total neutron production in the combined target consisting of the Be window 24 and the following Li layer depends on the energy of the incoming particle beam, e.g. it is about 0.6 mm for 10 MeV energy incoming proton beam.

The container 20 of the second embodiment has an open upper side as well through which the liquid lithium target 10 is preferably in communication with the vacuum space of the particle accelerator in order to avoid building up of pressure inside the liquid Li container, as schematically illustrated in Fig. 2.

Apart from the differences described, the embodiment shown in Fig. 2 is similar to that shown in Fig. 1.

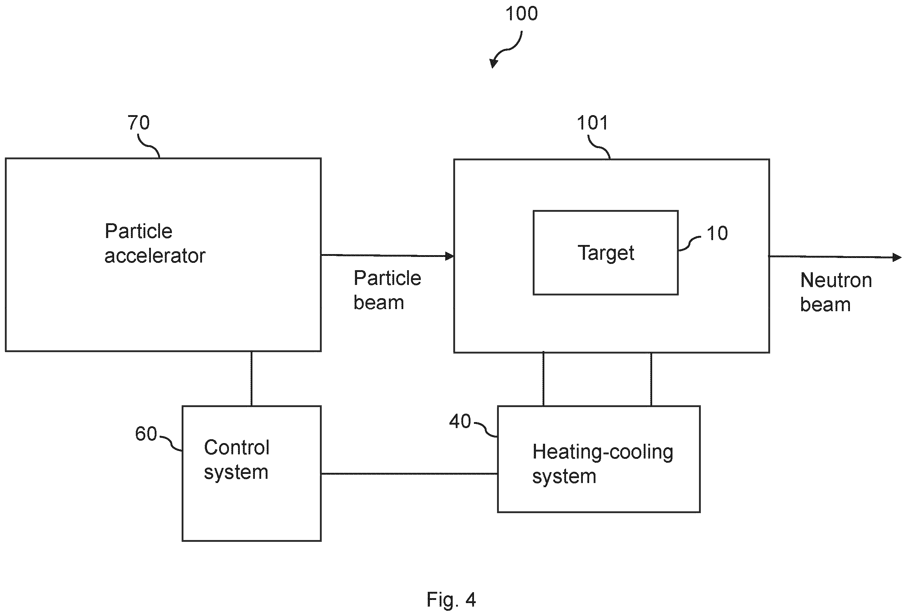

According to a preferred embodiment the neutron source assembly 100 also comprises a control system 60 as illustrated in Fig. 4, which control system 60 is operationally connected to the heating-cooling assembly 40. Both the embodiment of Fig. 1 and the embodiment of Fig. 2 may be equipped with such a control system 60. It is advisable to steadily measure and record during operation the temperature of the surface of the Li target 10 on the side exposed to the particle radiation in the embodiment in Fig. 1 and the temperature of the same side of the beam window 24 in the embodiment of Fig. 2. This can for example be accomplished by the observation of the here listed surfaces by infrared camera. The difference between the temperature of the heated/cooled base plate 42 and of the surface of the target 10 or of the beam window 24 irradiated directly by the particles is an operational parameter of the stationary liquid Li target system in this invention.

The control system 60 may include, or be in communication with, one or more processors, memory devices, and input/output interfaces. The control system 60 may be implemented using dedicated hardware, software executed on general-purpose or specialized computing platforms, programmable logic, or any combination thereof. For example, the control system 60 may be a personal computer, a server, a laptop, a microcontroller, etc. or any combination thereof. The control system 60 may comprise a plurality of control units, each of which may be for example a personal computer, a server, a laptop, a microcontroller, etc. or any combination thereof. The control system 60 may be local or remote or a combination thereof (e.g. a local computer and a remote server) and may communicate with other components via wired or wireless communication links, including Ethernet, USB, serial interfaces, or network protocols such as TCP/IP, Wi-Fi, or Bluetooth. The control system 60 may further include sensors, actuators, power controllers, user interfaces, and external computing devices such as servers, workstations, or mobile devices.

The control system 60 is preferably also operably connected to a particle accelerator 70 providing the accelerated particle beam, which may or may not form part of the neutron source assembly 100. The control system 60 may be configured to manage the operation of the particular accelerator system and/or to receive data therefrom.

According to a preferred embodiment the control system 60 is configured to deliver an accelerated particle beam, preferably proton or deuterium beam, through the particle beam line 30 to impact on the lithium target 10. Delivering the accelerated particle beam may be carried out by actively controlling the particle accelerator 70 to produce the accelerated particle beam. Delivering the accelerated particle beam is understood to include the possibility that the control system 60 communicates with an external system responsible for controlling the particle accelerator 70 and thereby causing or being informed of the delivery of the accelerated particle beam to the beam line 30.

The control system 60 is further configured to be able to control the heating-cooling assembly 40 so as to maintain the surface of the lithium target 10 first met by the accelerated particles in the liquid phase. **To** increase the cooling efficiency, the cooling temperature may be set below the melting point of lithium, and the system is either operated at particle power insufficient to melt the lithium target, or the system is run with only partially molten lithium, while the side of the Li target facing the cooling black plate surface 23 stays solid, or it stays solid at the edges of the particle beam impact, where the particle beam flux is lower. **The** liquid target 10 option is also interesting at low enough power operation that the Li target 10 remains solid fully or partially. After a period of fully or partially solid target operation, melting the full target 10 with the help of the heating-cooling system 40 at the accelerator operational high vacuum conditions without beam on target 10 regenerates the solid target by allowing for the evaporation of hydrogen deposited in the target 10 and healing other damages to the target lattice structure in the solid phase

Controlling the heating-cooling assembly 40 may include controlling a pump for circulating the heating-cooling fluid, measuring the temperature of the heating-cooling fluid or the baseplate 41, controlling the heating-cooling unit 45 (e.g. heat exchanger) to heat or cool the circulated cooling or heating fluid depending on the measured temperature.

According to a first preferred mode of operation the control system 60 is further configured to control the heating-cooling assembly 40 to heat the lithium target 10 to transition to liquid phase prior to delivering the accelerated particle beam. During delivery of the accelerated particle beam the heating-cooling assembly 40 may be used for both heating and cooling as required to keep the temperature of the liquid lithium target 10 between 180 degrees and 500 degrees or any other preferred temperature range such as 180 to 300 degrees.

According to a second preferred mode of operation the control system 60 is further configured to start delivering the accelerated particle beam to the lithium target 10 when the lithium target 10 is in solid phase; to control the heating-cooling assembly 40 so as to allow the lithium target 10 to heat and transition to the liquid phase, and thereafter to control the heating-cooling assembly 40 so as to maintain the lithium target 10 in the liquid phase during further delivery of the accelerated particle beam.

According to a third preferred mode of operation the control system 60 is configured to deliver the accelerated particle beam, preferably proton or deuterium beam, through the particle beam line 30 to impact on the lithium target 10 in solid phase; to control the heating-cooling assembly 40 so as to maintain the lithium target 10 in solid phase throughout the particle beam operation. The control system 60 is further configured to occasionally control the heating-cooling assembly 40 so as to heat the lithium target 10 to transition to liquid phase when the operation of the accelerated particle beam has ended, and to maintain the lithium target 10 in liquid phase for a period of time sufficient to allow diffusion, eventually combination into H₂ molecules and evaporation of hydrogen created by the accelerated particle beam radiation. This does not mean that it is necessary to wait until all the H atoms and H₂ molecules evaporate, even partial evaporation of hydrogen can help to reverse the degradation of the lithium target 10.

A method for generating neutrons using the neutron source assembly 100 according to the invention will now be described in more detail.

According to a first embodiment the method comprises delivering an accelerated particle beam, preferably proton or deuterium beam, to impact on the lithium target 10 for generating neutrons, and thermally regulating the surface of the lithium target 10 towards the incoming particle beam with the heating-cooling assembly to maintain the lithium target 10 in liquid phase preferably between a temperatures of 180°C to 500°C, more preferably between 200°C to 500°C. In case the cooling is insufficient for keeping the liquid Li temperature below an adequate upper temperature limit for the purpose of avoiding excessive evaporation of the liquid Li target 10 the proton beam power can also be limited.

At beam operation there always will be a strong temperature gradient between the surface of the Li target 10 where the particle beam enters the Li target 10 and the back side 23 that is cooled. It is also a stable situation in which the cooled surface of the Li target 10 remains solid while the side heated by the particle beam is liquid. It is also conceivable that the parts of the flat shaped Li target closer to the edges of the area of particle beam impact remain solid, as long as the cooling plate temperature is less than 180 C°. The Li target 10 can be advantageously homogenized and regenerated by heating it homogeneously above the melting point in the absence of particle beam impact.

A further preferred method comprises heating the lithium target 10 with the heating-cooling assembly 40 to transition the lithium target 10 to liquid phase prior to delivering the accelerated particle beam. Another preferred method comprises the steps of starting to deliver the accelerated particle beam to impact on the lithium target 10 while the lithium target 10 is still in solid phase, allowing the lithium target to heat under the effect of the accelerated particle beam and to thereby transition to liquid phase. Thereafter continuing to deliver the accelerated particle beam to impact on the liquid lithium target 10 while maintaining the liquid phase by thermally regulating the lithium target 10 with the heating-cooling assembly 40, preferably keeping its temperate above 180°C and below 500°C. The heating-cooling assembly 40 can be used to cool the liquid lithium and keep it from excessive evaporation. The temperature-controlled baseplate 41 can also keep the Li target 10 in liquid phase in the absence of sufficient particle beam power.

According to another preferred embodiment the following steps are performed. Delivering an accelerated particle beam, preferably proton or deuterium beam, to impact on the lithium target 10 being in solid phase for generating neutrons. This can be done in case of low particle beam power by adequately cooling the lithium target with the heating-cooling assembly 40 to maintain the lithium target 10 in solid phase. A particle energy will be a constant, defined by the accelerator (maybe also adjustable at more complex accelerators). The delivered heating energy depends strongly of the intensity of the particle beam, usually expressed in current. For example, with 2.5 keV proton energy (common to BNCT cancer therapy set-ups), 10 mA time average beam current means 25 KW heat delivered to the irradiated volume of the target 10, which heat can be efficiently absorbed by the heating-cooling system 40. In this application the layer thickness of the lithium target 10 is chosen such that the penetration depth of the particles in Li is smaller than the layer thickness in the particle beam direction. After finishing the accelerated particle beam operation, the degradation of the lithium target 10 can be reversed from time to time by heating the lithium target 10 with the heating-cooling assembly 40 to transition to liquid phase, and by maintaining the lithium target 10 in the liquid phase under high vacuum for a period of time sufficient to allow diffusion and evaporation of H atoms created by the accelerated particle beam radiation and thus heal the radiation damage. As explained above, this does not imply wating for all of the hydrogen impurities to disappear.

For particle energies below 3-4 MeV, preferably in the range of 2-3 MeV, the liquid Li target 10 is preferably contained as a shallow layer (less than 3 mm, preferably 1 - 2 mm) in the container 20 with the upper horizontal surface of the liquid freely exposed to the high vacuum maintained for proton beam propagation as explained in connection with the first embodiment illustrated in Fig. 1.

In case of higher particle energies above 5 - 8 MeV it becomes feasible to expose the stationary liquid Li target 10 to the proton beam through the material window 20 on the side wall of the container 20 (as in Fig. 2) without excessive loss of proton beam intensity and energy in the crossing of the material window 24.

The bulk of the initial energy spectrum of the fast neutrons created by the capture of the proton beam close to the horizontal liquid lithium surface is above 10 keV energy, for which the neutron absorption cross section of lithium is quite small even for natural Li, that contains 7.5 % of relatively highly neutron absorbing ⁶Li isotope. This absorption will have negligible effect on the intensity of the fast neutron spectrum emerging from the liquid Li layer on its back side 23, after traversing the thickness of this layer. Significant absorption loss would only apply for a very small fraction of the initial neutron spectrum that is emitted nearly parallel to the Li layer with several cm trajectory inside the liquid. In principle Li is also commercially available with much reduced ⁶Li isotope content, however this would only have a very small effect on the fast neutron intensity emerging on any side of the Li target volume. Neutron absorption loss effects in the temperature-controlled baseplate 41, will also only produce negligible losses in emitted neutron intensity, in view of the much lower neutron absorption probability in most adequate structural materials of high thermal conductivity. For example, copper with optimal heat conductivity displays more than an order of magnitude smaller neutron absorption probability than natural Li.

**The** neutron source assembly 100 according to the invention and the method according to the invention can be advantageously used for thermal, epithermal and cold neutron beam production with proton accelerators 70 in the particle energy range of 2 - 25 MeV. At higher particle energies there are other mostly solid target materials available which provide for the generation of fast neutrons with better efficiency than Li.

**It** will be apparent to those skilled in the art that various modifications are conceivable to the above disclosed embodiments without departing from the scope of protection determined by the appended claims.

## Claims

1. Neutron source assembly (100) containing a lithium target (10) and a particle beam line (30) for delivering an accelerated particle beam to the lithium target (10), wherein the lithium target (10) is arranged in a container (20) adapted to hold the lithium target (10) in liquid phase, the container (20) having an open upper side (22) and a back side (23) opposite to the direction of the particle beam line (30), and a heating-cooling system (40) is arranged for the back side (23) of the container (20).

2. The neutron source assembly according to claim 1, wherein the particle beam line (30) is facing the open upper side (22) of the container (20) and the opposite back side (23) is the bottom side of the container (20), which is arranged in a substantially horizontal position, and the container (20) is preferably dimensioned such that the lithium target (10) fills the container (20) up to a height of less than 3 mm, preferably 1 - 2 mm, when in liquid phase and the particle beam line (30) is preferably configured to deliver the accelerated particle beam to a horizontal upper surface of the lithium target (10) at an impact angle of less than 45°, preferably less than 30°, more preferably at an impact angle between 15-30°.

3. The neutron source assembly according to claim 1, wherein a material window (24) is provided on the side of the container (20) facing the particle beam line (30), the material window (24) extends at least partly in a vertical direction and has a thickness of less than 1 mm, preferably of less than 0.6 mm and preferably comprises beryllium, and a width of an inner space (21) of the container (20) between the material window (24) and the opposite back side (23) is preferably less than 3 mm, more preferably it is 1 - 2 mm.

4. The neutron source assembly according to any one of claims 1 to 3, wherein the heating-cooling system (40) comprises a baseplate (41) with an integrated tube (42) for circulating a heat transfer fluid therein, the baseplate (41) being arranged adjacent to or forming the back wall of the container (20) on the back side (23) of the container (20), and the heating-cooling tube (42) is preferably arranged in a spiral or serpentine pattern and filled with pressurized liquid, preferably water, and the heating-cooling system (40) preferably further comprises a heating-cooling unit (45) adapted to heat or cool the pressurized liquid.

5. The neutron source assembly according to any one of claims 1 to 4, wherein the lithium target (10) is surrounded by a moderator-reflector system (50) containing at least one neutron beam line (53) and the particle beam line (30) is configured to enter the moderator-reflector system (50) and preferably a moderator (51) of the moderator-reflector system (50) comprises Teflon (C₂F₄)ₙ and MgO.

6. The neutron source assembly according to any one of claims 1 to 5, wherein a control system (60) is provided, the control system (60) being operably connected to the heating-cooling assembly (40) and to a particle beam accelerator (70), the control system (60) being configured:
to deliver an accelerated particle beam, preferably proton or deuterium beam, through the particle beam line (30) to impact on the lithium target (10), and
to control the heating-cooling system (40) so as to maintain the lithium target (10) within a defined temperature range.

7. The neutron source assembly according to claim 6, wherein the control system (60) has a first mode of operation in which it is configured to control the heating-cooling system (40) so as to heat the lithium target (10) to transition to liquid phase prior to delivering the accelerated particle beam.

8. The neutron source assembly according to claim 6, wherein the control system (60) has a second mode of operation in which it is configured:
to start delivering the accelerated particle beam to the lithium target (10) when the lithium target (10) is in solid phase,
to control the heating-cooling system (40) so as to allow the lithium target (10) to heat up and transition to the liquid phase, and
to control the heating-cooling system (40) so as to maintain the lithium target (10) in the liquid phase.

9. The neutron source assembly according to any one of claims 6 to 8, wherein the control system (60) has a third mode of operation in which it is configured:
to deliver the accelerated particle beam, preferably proton or deuterium beam, through the particle beam line (30) to impact on the lithium target (10) in solid phase,
to control the heating-cooling system (40) so as to maintain the lithium target (10) in solid phase,
to control the heating-cooling system (40) so as to heat the lithium target (10) to transition to liquid phase after finishing the delivery of the accelerated particle beam, and
to maintain the lithium target (10) in liquid phase for a period of time sufficient to allow enhanced rate of diffusion and evaporation of the hydrogen or deuterium created by the accelerated particle beam radiation during the preceding irradiation

10. Method of generating neutrons with the neutron source assembly (100) according to any one of claims 1 to 9, comprising
delivering an accelerated particle beam, preferably proton or deuterium beam, to impact on the lithium target (10) for generating neutrons,
thermally regulating the lithium target (10) with the heating-cooling system (40) to maintain the lithium target (10) in liquid phase.

11. The method according to claim 10, comprising heating the lithium target (10) with the heating-cooling system (40) to transition the lithium target (10) to liquid phase prior to delivering the accelerated particle beam.

12. The method according to claim 10, comprising
starting to deliver the accelerated particle beam to impact on the lithium target (10) when the lithium target (10) is in solid phase,
allowing the lithium target (10) to heat and transition to liquid phase,
continuing to deliver the accelerated particle beam to impact on the liquid lithium target (10), and
maintaining the liquid phase by thermally regulating the lithium target with the heating-cooling system (40).

13. Method of generating neutrons with the neutron source assembly (100) according to any one of claims 1 to 9, comprising:
delivering an accelerated particle beam, preferably proton or deuterium beam, to impact on the lithium target (10) in solid phase for generating neutrons,
cooling the lithium target (10) with the heating-cooling system (40) to maintain the lithium target (10) in solid phase,
ending the delivery of the accelerated particle beam,
heating the lithium target (10) with the heating-cooling system (40) to transition to liquid phase, and
maintaining the lithium target (10) in liquid phase for a period of time sufficient to allow diffusion and evaporation of hydrogen or deuterium created in the target by the preceding accelerated particle beam radiation.

14. The method according to any one of claims 10 to 13, comprising providing a container (20) having a material window (24) on its side facing the particle beam line (30), which material window (24) extends at least partly in a vertical direction and has a thickness of less than 1 mm, preferably of less than 0.6 mm and preferably comprises beryllium, and an inner space (21) of the container (20) has a width of less than 3 mm, preferably 1 - 2 mm between the material window (24) and the back side (23) of the container (20),
providing an accelerated particle beam of at least 5 MeV, preferably at least 10 MeV,
guiding the accelerated particle beam to impact on the material window (24).

15. The method according to any one of claims 10 to 13, comprising providing the particle beam line (30) facing the open upper side (22) of the container (20), arranging the opposite back side (23) of the container (20) in a horizontal position, providing the lithium target (10) in a quantity filling the container (20) up to a height of less than 3 mm, preferably 1 - 2 mm, when in liquid phase,
providing an accelerated particle beam of 2-5 MeV, preferably 2-3 MeV,
guiding the accelerated particle beam to the upper side (22) of the container (20).
